# EUROPEAN PATENT APPLICATION

(11) **EP 1 466 528 A1**
(43) Date of publication of application: **13.10.2004**
(21) Application number: 04076089.4
(22) Date of filing: 07.04.2004
(51) Int. Cl.: A22C 17/00

(54) **Method for the composition of a meat tower and disc of foodstuff that is used for this method.**

(30) Priority: 11.04.2003 BE 200300234
(71) Applicant: Pittaman BVBA., 2900 Schoten (BE)
(72) Inventor: Meyer, Bruno August Josepha Josef, 2930 Brasschaat (BE)
(74) Representative: Donné, Eddy

(57) **Abstract**

Method for the composition of a meat tower, characterised in that it mainly consists of the compressing of foodstuff (1) to relatively thin discs (10); the providing of at least one opening (11) in the discs (10); the cooking of the discs (10); and the placing of the cooked discs (10) onto a spit (5).

## Description

The present invention concerns a method for the composition of a meat tower.

At the same time, the invention concerns a disc of foodstuff that is used for the composition of an above-mentioned meat tower.

In particular, the invention concerns a meat tower of the type as applied in a grill of the style kebab or the like, whereby pieces are cut from the meat tower in order to serve as filling for a pitta bread or the like.

Such meat tower mainly consists of meat, but may also contain vegetables, fruit, cereals and the like.

It is known that such meat tower may in a traditional way be composed by threading pieces of meat, in layers and crosswise onto a spit.

A disadvantage of this traditional method is that the composition of the meat tower is time consuming.

It is further known that such meat tower may be composed by using raw pieces of meat which are compressed to thick blocks in the order of five kilogram, which are relatively high in comparison with their diameter and which are provided with a central opening. These blocks are mostly deep-frozen while awaiting to be used.

In order to compose a meat tower one or maximum two of such blocks are put over a spit in order to be prepared in a grill.

A disadvantage of the use of such known blocks for the composition of a meat tower, is that the meat is raw and in a deep-frozen block-form state when put onto the grill, hence a long grill time is required to cook the meat.

Another disadvantage of a meat tower composed of one or two of the above-mentioned blocks is that the seller of pitta breads is bound to the composition of these blocks and hence is restricted regarding the choice of sorts of meat offered.

Yet another disadvantage is that when grilling the known meat towers, the volume decreases due to loss of liquid and fat, hence less meat volume remains that can be used as filling and the draining liquid and fat cause a strong filth on the grill.

Yet another disadvantage when using these known blocks is that when cutting the grilled meat from the meat tower, strips of meat are received which before being used as filling on a pitta bread, must be further cut into smaller pieces of meat, demanding extra time.

The invention aims to offer a solution for the above-mentioned and other disadvantages.

To this end the invention concerns a method for the composition of a meat tower, whereby said method mainly consists of the compressing of foodstuff to relatively thin discs; the providing of at least one opening in the discs; the cooking of the discs; and putting these cooked discs onto a spit.

Cooking of the discs means that they are completely or only partially cooked, for example by sealing the outside of the discs, so that the fat and the liquid will no longer drain from the discs and the discs will less easily fall apart.

An advantage of the method according to the invention is that, since the meat tower is composed of relatively thin discs, the composition of the meat tower, depending on the needs, may be adjusted easily and rapidly by combining discs of one or more different sorts of meat.

Another advantage is that also discs consisting of vegetables, fruit, cereals and/or the like can be made, which may be combined with meat discs on a meat tower, thus offering the possibility to compose varied meat towers.

Yet another advantage is that the meat has beforehand been cooked, thus strongly reducing the grill time.

Yet another advantage of meat already cooked is that, during the grilling, there is less loss of liquid and fat and the grill gets less filthy.

Yet another advantage is that cooked meat will keep for a longer time than raw meat, hence the discs may be made relatively long beforehand without the need of being deep-frozen.

Yet another advantage of the meat tower according to the invention in comparison with the known meat towers with one or two thick blocks of meat, is that when cutting the meat from the meat tower according to the invention small pieces may be obtained instantly without the need of extra cutting.

The invention further concerns a disc of foodstuff which may be used for the composition of a meat tower according to the method of the invention, whereby it is formed of compressed and cooked foodstuff and whereby said disc is provided with at least one opening and has a thickness that is considerably smaller than half the width.

In order to better explain the characteristics of the invention, a method according to the invention is described as an example without being limitative in any way, as well as a preferred embodiment of a disc of foodstuff that is used in this method, with reference to the accompanying drawings, in which:
Figure 1 is a schematic view of the successive steps of the method according to the invention;

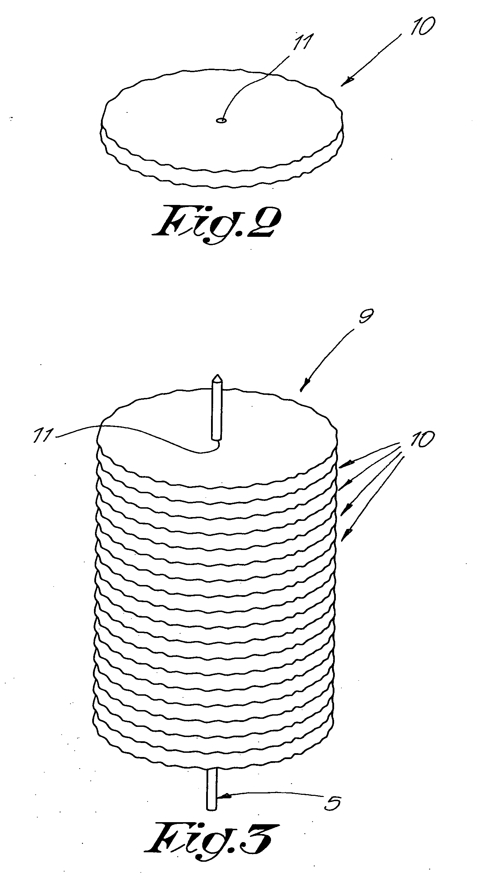

Figure 2 is on a larger scale a perspective view of the part indicated in Figure 1 by F2;
Figure 3 is on the same scale as the one of Figure 2 a perspective view of the part indicated in Figure 1 by F3.

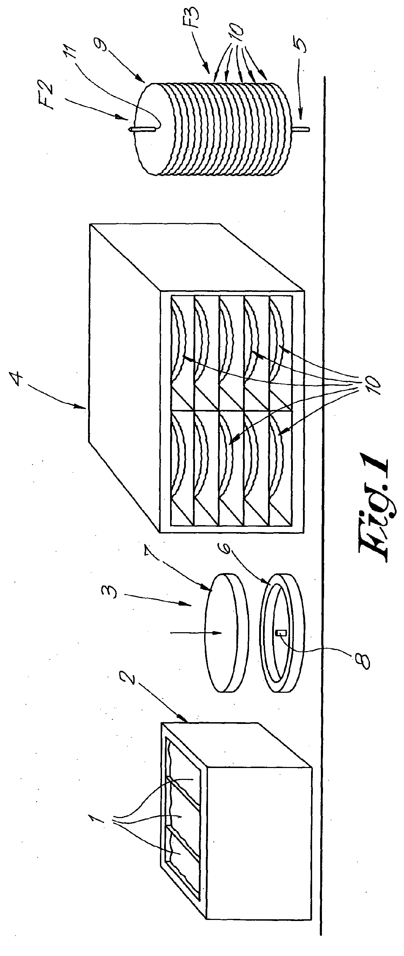

Figure 1 gives a schematic view of successive steps of the method according to the invention, whereby in this case use is made of foodstuff 1, which is stored in a container 2 with one or two compartments; of a form 3; of an oven 4; and a spit 5.

The foodstuff 1 is in this case fresh and not deep-frozen and consists of one sort of foodstuff 1 or of several sorts of foodstuff 1 such as meat, vegetables, fruit, cereals and the like, which are preferably cut or minced in smaller pieces.

The form 3 consists in this case of a round mould 6 and a stamp 7, whereby in the mould 6 is provided a core 8.

It is also obvious that additives may be added to the foodstuff 1, such as herbs, fats or the like.

The method for the composition of a meat tower 9 according to the invention consists mainly in that the foodstuff is applied in the form 3; and that next the foodstuff 1 is compressed in the form 3 to form a relatively thin disc of foodstuff 10, in other words a disc 10 the thickness of which is considerably smaller than half the width of the disc 10, or hence, in this case of a round disc 10, considerably smaller than the diameter.

The disc 10 shows in this case a thickness which is considerably smaller than the diameter and is provided of a central opening 11, which preferably has a diameter in the order of the diameter of the spit 5.

In this way, several discs 10 are formed which are then cooked in the above-mentioned oven 4 or the like, after which the discs 10 are put onto the spit 5.

The meat tower 9 thus obtained, may further be used in a pitta grill, whereby, after grilling, pieces of meat are vertically cut from the meat tower 9, so that due to the disc-formed composition of the meat tower 9 small pieces of meat are obtained, which may subsequently be used as filling for a pitta bread or the like.

In a preferred embodiment the putting of the discs 10 is done by the seller of pitta breads, while the compressing and the cooking of the discs 10 is done by a manufacturer, who may if need be deep-freeze the cooked discs.

It is obvious that openings 11 must not necessarily be applied centrally in the discs 10 and that furthermore several openings 11 may be provided in one and the same disc 10.

Although in the method described above, the openings 11 are made in the discs 10 during the compressing of the foodstuff 1 in the form 3, it is not excluded that these openings 11 are made using a separate process, for example by perforation of the discs 10 or the like.
It is obvious that for the compressing of the discs 10 the forms 3 are not necessarily to be used, but that such discs 10 for example may also be made by the compressing of a quantity of foodstuff 1 between two plates or the like.

It is also obvious that several discs 10 may be made simultaneously in order to reach a higher production speed.

The method according to the invention is in no way limited to the embodiment which is described in the example and represented in the figures, but such a method may be realised according to several alternatives without departing from the scope of the invention.

The disc of foodstuff according to the invention too is in no way limited to the embodiment which is described in the example and represented in the figures, but such a disc may be realised according to several alternatives without departing from the scope of the invention.

## Claims

1. Method for the composition of a meat tower, **characterised in that** it mainly consists of the compressing of foodstuff (1) to relatively thin discs (10); the providing of at least one opening (11) in the discs (10); the cooking of the discs (10); and the placing of the cooked discs (10) onto a spit (5).

2. Method according to claim 1, **characterised in that** the compressing of the foodstuff (1) is done in a round form (3).

3. Method according to claim 1, **characterised in that** the foodstuff (1) is compressed to discs (10), the thickness of which is considerably smaller than half the width.

4. Method according to claim 1, **characterised in that** the diameter of the opening (11) of the discs (10) is in the same order of the diameter of the spit (5) used.

5. Method according to claim 1, **characterised in that** the discs (10) are deep-frozen after the cooking thereof.

6. Method according to claim 1, **characterised in that** the compressing and cooking of the discs (10) is done separately from the placing of the discs (10) onto the spit (5), in particular the compressing and cooking of the discs (10) is done by a manufacturer and the placing of the discs is done by a pitta seller or the like.

7. Disc of foodstuff for the composition of a meat tower, **characterised in that** it is formed of compressed and cooked foodstuff (1), whereby said disc (10) is provided with at least one opening (11) and has a thickness that is considerably smaller than half the width.

8. Disc of foodstuff according to claim 7, **characterised in that** it is round.

9. Disc of foodstuff according to claim 7, **characterised in that** it is provided with a central opening (11).

10. Disc of foodstuff according to claim 7, **characterised in that** it is composed of one or more sorts of foodstuff (1) .

11. Disc of foodstuff according to claim 10, **characterised in that** it contains meat and/or a meat surrogate.

12. Disc of foodstuff according to claim 10, **characterised in that** it contains vegetables, fruit or grains.
